# EUROPÄISCHE PATENTANMELDUNG

(11) **EP 1 084 924 A2**
(43) Veröffentlichungstag der Anmeldung: **21.03.2001**
(21) Anmeldenummer: 00119804.3
(22) Anmeldetag: 12.09.2000
(51) Int. Cl.: B60T 11/34, B60T 17/02, B60T 11/32

(54) **Druckbegrenzungs-und Drucksicherungsventil für Druckluftbremsanlagen von Kraftfahrzeugen**

(30) Priorität: 18.09.1999 DE 19944808
(71) Anmelder: Haldex Brake Products GmbH, 69123 Heidelberg (DE)
(72) Erfinder: Heer, Siegfried, 69168 Wiesloch (DE)
(74) Vertreter: Patentanwälte Rehberg + Hüppe

(57) **Zusammenfassung**

Ein Druckbegrenzungs- und Drucksicherungsventil weist einen in einem Gehäuse (1) angeordneten anströmseitigen Eingang (2) und einem abströmseitigen Ausgang (3), ein zwischen Eingang (2) und Ausgang (3) angeordnetes, in Durchströmrichtung öffnendes Rückschlagventil (6), einen auf einer Begrenzungsfeder (11) gehäuseseitig abgestützten Begrenzungskolben (10), der eine Wirkfläche besitzt, die vom Druck im Ausgang (3) beaufschlagt ist und der an einer Kolbenstange (12) zwei Ventilkörper (16, 20) trägt, die mit zwei Ventilsitzen je ein Durchlaßventil (16, 19; 20, 22) bilden, und einen Betätigungskolben (38) für eine Betätigung des Begrenzungskolbens (10) über ein elektrisch ansteuerbares Magnetventil (41) auf. Das Magnetventil (41) ist in einer Leitung (39) angeordnet. Nach seinem Öffnen strömt Druckluft auf den Betätigungskolben (38). Die Kolbenstange (12) des Begrenzungskolbens (10) ist geteilt und mit einem Einstellgewinde (15) versehen. Die beiden Teile (13, 14) der Kolbenstange (12) des Begrenzungskolbens (10) sind gegeneinander abgedichtet.

## Beschreibung

Die Erfindung betrifft ein Druckbegrenzungs- und Drucksicherungsventil für Druckluftbremsanlagen von Kraftfahrzeugen mit den im Oberbegriff des Anspruches 1 angegebenen Merkmalen. Solche Druckbegrenzungs- und Drucksicherungsventile können Bestandteil von Mehrkreisschutzventilen oder von Druckluftbeschaffungsanlagen sein. Sie sind in der Regel einzelnen Bremskreisen oder Druckluftversorgungskreisen zugeordnet. Ein solches Druckbegrenzungsventil dient dazu, eine Druckluftbereitstellung mit einem vergleichsweise höheren Druck zu ermöglichen, während in dem betreffenden Kreis ein entsprechend geminderter, also begrenzter Druck aufrechterhalten werden soll. Insbesondere ist dies der Fall bei dem Bremskreis, der der Hilfs- und/oder Feststellbremse zugeordnet ist. Dies betrifft auch den Bremskreis, der dem Anhänger zugeordnet ist. Ein solches Druckbegrenzungs- und Drucksicherungsventil hat jedoch nicht nur die Aufgabe, den begrenzten Druck ausgangsseitig zur Verfügung zu stellen. Es muß vielmehr auch in mehrfacher Hinsicht eine Sicherungsfunktion erfüllen. Dies bedeutet beispielsweise eine bevorzugte Befüllung vorangehender Kreise, beispielsweise der beiden Betriebsbremskreise, wie dies bei einem Mehrkreisschutzventil üblich ist. Aber auch eine Auswirkung auf den abströmseitig angeschlossenen Kreis soll vorhanden sein. So ist es Aufgabe eines solchen Ventils, auch im Defektfall den abströmseitig angeschlossenen Kreis mit einem Sicherungsdruck zu versorgen bzw. einen solchen Sicherungsdruck aufrechtzuerhalten.

Ein Druckbegrenzungs- und Drucksicherungsventil der eingangs beschriebenen Art ist aus der DE 197 10 814 C1 bekannt. Es wird dabei in Verbindung mit einer Druckluftaufbereitungseinrichtung eine Druckluftbeschaffungsanlage eingesetzt. Das Druckbegrenzungs- und Drucksicherungsventil weist ein Gehäuse auf, in welchem ein anströmseitig angeordneter Eingang und ein abströmseitig angeordneter Ausgang verwirklicht sind. Der Eingang ist mit der Druckluftbeschaffungsanlage verbunden. Der Ausgang ist mit dem betreffenden Kreis verbunden. Zwischen den Eingang und den Ausgang ist ein Rückschlagventil eingeschaltet, welches in Durchströmrichtung öffnet, dessen Ventilkörper also von einer Feder entgegen der Durchströmrichtung auf einen Sitz angedrückt wird. Weiterhin ist ein Begrenzungskolben vorgesehen, der auf einer Begrenzungsfeder gehäuseseitig abgestützt ist. Der Begrenzungskolben besitzt eine Wirkfläche, die vom ausgesteuerten Druck beaufschlagt wird. Die Dimensionierung und Abstimmung ist so getroffen, daß unter Zusammendrückung der Begrenzungsfeder der Begrenzungskolben beim Erreichen des vorgesehenen begrenzten Druckes auf eine Schließung des Durchgangs vom Eingang zu dem Ausgang einwirkt. Zu diesem Zweck trägt der Begrenzungskolben eine Kolbenstange, an der zwei Ventilkörper verwirklicht sind, die mit zwei Ventilsitzen je ein Durchlaßventil bilden. Diese Durchlaßventile wirken mit dem Rückschlagventil zusammen, und zwar derart, daß bei ansteigendem Druck das Druckbegrenzungs- und Drucksicherungsventil zunächst eine Schließstellung beibehält, um beispielsweise eine bevorzugte Befüllung vorangehender Kreise zu ermöglichen. Beim Erreichen einer vorgesehenen Druckstufe (Öffnungsdruck) öffnet das Rückschlagventil und läßt Druckluft nach der Abströmseite durch. Damit wird zugleich ein Reaktionsdruck auf dem Druckbegrenzungskolben aufgebaut. Beim Erreichen des begrenzten Druckes schließt das Druckbegrenzungs- und Drucksicherungsventil, so daß auf der Abströmseite der Druck nicht weiter erhöht werden kann. Weiterhin besitzt das bekannte Druckbegrenzungs- und Drucksicherungsventil einen Betätigungskolben für eine elektrische Betätigung des Begrenzungskolbens über ein Magnetventil. Das Magnetventil ist in einer Leitung angeordnet, die mit dem Eingang verbunden ist. Nach dem Öffnen des Magnetventils strömt Druckluft auf den Betätigungskolben, der seinerseits den Begrenzungskolben mitnimmt und so eine Öffnung des Druckbegrenzungs- und Drucksicherungsventils herbeiführt. Ein solches Druckbegrenzungs- und Drucksicherungsventil wird in der Regel, also bei intakter Anlage, elektrisch gesteuert. Die elektrische Steuerung ist der mechanischen Steuerung in der Regel überlegen, weil sie schneller erfolgen kann und im übrigen auch vergleichsweise größere Kräfte zum Einsatz kommen können. Es ist jedoch erwünscht, daß das Druckbegrenzungs- und Drucksicherungsventil auch dann seine Funktion erfüllt, wenn die elektrische Versorgung ausgefallen oder der elektrische Teil in irgendeiner Weise gestört ist.

Insbesondere dann, wenn ein solches Druckbegrenzungs- und Drucksicherungsventil, wie im Zusammenhang mit einer Druckluftbeschaffungsanlage in der DE 197 10 814 C1 gezeigt, in sehr kleiner Bauweise verwirklicht werden muß, ergeben sich verschiedene Schwierigkeiten. Einerseits werden die zur Verfügung stehenden Querschnitte sehr klein, so daß eine schnelle Luftdurchströmung gehindert ist. Zum anderen wirken sich Toleranzen an den kleinen Bauteilen verfälschend auf die einzuhaltenden Drücke aus. Auch Reibungseinflüsse von Dichtungen und anderen Bauteilen können die einwandfreie Funktion beeinträchtigen oder sogar verhindern. Diese Beeinträchtigungen können soweit gehen, daß sie eine Serienfertigung derartiger Begrenzungs- und Drucksicherungsventile verhindern, weil es nicht möglich ist, die Toleranzen so klein zu wählen und einzuhalten, daß sich hieraus die gewünschten Drücke reproduzierbar ableiten lassen.

Die DE 33 11 816 C1 zeigt ein Druckbegrenzungsventil für Druckluftbremsanlagen von Kraftfahrzeugen. Bei dieser bekannten Bauart ist ein Begrenzungskolben auf einer Begrenzungsfeder abgestützt. Das Gehäuse besitzt einen Eingang und einen Ausgang mit einem dazwischen angeordneten Durchlaßventil. Die Begrenzungsfeder ist über eine Stellschraube in ihrer Kraft einstellbar ausgebildet, so daß auf diese Art und Weise der begrenzte Druck des Druckbegrenzungsventils einstellbar ist. Durch den einfachen Aufbau ist die Stellschraube zur Einstellung der Begrenzungsfeder in einfacher Weise von außen zugänglich. Ein solches Druckbegrenzungsventil läßt keine bevorzugte Befüllung vorangeschalteter Kreise zu, weil sein Durchlaßventil in der drucklosen Stellung bereits offensteht und so eine Überströmung mit Druckluft von Anfang an stattfindet. Der Begrenzungskolben verschiebt sich mit steigendem Druck in Richtung auf die Abströmseite, wobei die Begrenzungsfeder entsprechend zusammengedrückt wird.

Der Erfindung liegt die Aufgabe zugrunde, bei einem Druckbegrenzungs- und Drucksicherungsventil der eingangs beschriebenen Art, das also elektrisch ansteuerbar ist und bei Ausfall der Elektrik pneumatisch wirkt, den Begrenzungsdruck einstellbar zu machen, um insbesondere bei kleiner Bauweise des Druckbegrenzungs- und Drucksicherungsventils Toleranzen und auftretenden Reibungen entgegenzuwirken, um so eine Serienfertigung eines solchen Druckbegrenzungs- und Drucksicherungsventils mit reproduzierbar eingestellten Drücken zu ermöglichen.

Erfindungsgemäß wird dies bei dem Druckbegrenzungs- und Drucksicherungsventil der eingangs beschriebenen Art dadurch erreicht, daß die Kolbenstange des Begrenzungskolbens geteilt und mit einem Einstellgewinde versehen ist, und daß die beiden Teile der Kolbenstange des Begrenzungskolbens gegeneinander abgedichtet sind.

Die Erfindung geht von dem Gedanken aus, den Begrenzungsdruck einstellbar zu machen, um trotz unvermeidlicher Herstellungstoleranzen derartige Ventile reproduzierbar auf einen festgelegten Begrenzungsdruck einstellen zu können. Da es sich bei dem Druckbegrenzungs- und Drucksicherungsventil um ein solches handelt, welches auch elektrisch betätigbar ist, ergibt sich eine besondere Bauweise, bei der die Begrenzungsfeder kaum oder gar nicht zugänglich ist. Indem die Kolbenstange des Begrenzungskolbens geteilt und mit einem Einstellgewinde versehen wird, besteht die Möglichkeit, verschiedene Zusammendrückungen der Begrenzungsfeder den verschiedenen Stellungen der Durchlaßventile zuzuordnen und so den Begrenzungsdruck einzustellen. Es wird also gleichsam die wirksame Länge der Kolbenstange verändert. Damit wird es möglich, solche Druckbegrenzungs- und Drucksicherungsventile mit sehr kleinen Durchmessern und Flächen herzustellen, so daß sie als Bestandteile größerer Ventilaggregate unterbringbar sind. Der begrenzte Druck kann in der Serienfertigung des Druckbegrenzungs- und Drucksicherungsventils verläßlich und reproduzierbar eingestellt werden. Das Ventil eignet sich dazu, zu mehreren in einem Ventilaggregat verbaut zu werden, um beispielsweise auch eine bevorzugte Befüllung vorangeschalteter Kreise zu ermöglichen. Das Ventil ist einmal elektrisch betätigbar. Bei intakter Anlage wird es elektrisch über ein Magnetventil angesteuert. Fällt aber die elektrische Versorgung aus oder liegt eine sonstige Beeinträchtigung im Bereich des Magnetventils oder der elektrischen Ansteuerung vor, dann wirkt das Druckbegrenzungs- und Drucksicherungsventil rein pneumatisch, d. h. es werden wirkungsmäßig all jene Stellungen erreicht, wie sie für die Zurverfügungstellung des begrenzten Druckes erforderlich sind. Dabei tritt noch der besondere Vorteil auf, daß kein Unterschied zwischen den beiden angesprochenen Wirkungsweisen feststellbar ist. Das Ventil erfüllt allein oder im Zusammenhang identische Funktionen, gleichgültig, ob ein elektrischer Defekt vorliegt oder nicht. Allenfalls ergeben sich in zeitlicher Hinsicht Unterschiede.

Die Kolbenstange und der Betätigungskolben sind durchbrochen ausgebildet, um die Wirkfläche des Begrenzungskolbens auf diesem Wege zu beaufschlagen. Auf dieser Wirkfläche wirkt sich der ausgesteuerte Druck aus.

Der dem Begrenzungskolben zugekehrte Teil der Kolbenstange ist zweckmäßig im Gehäuse verdrehgesichert gelagert. Der dem Begrenzungskolben abgekehrte Teil der Kolbenstange ist mit einer Angriffsfläche für ein Verdrehwerkzeug versehen. Damit ist es möglich, das Druckbegrenzungs- und Drucksicherungsventil von der Abströmseite her in einfacher Weise einzustellen. Die durchbrochene Ausbildung der Kolbenstange kann für die Anordnung der Angriffsfläche genutzt werden.

Der Begrenzungskolben und die Kolbenstange können als zwei getrennt bewegbare Teile ausgebildet sein. Der Begrenzungskolben ist auf der Begrenzungsfeder abgestützt. Zwischen Begrenzungskolben und Kolbenstange sind einseitig wirkende Anschläge vorgesehen. Bei Beaufschlagung des Begrenzungskolbens mit der abströmenden Luft nimmt der Begrenzungskolben die Kolbenstange mit, bis die Abschlußstellung erreicht wird. Andererseits bildet die Teilung zwischen Begrenzungskolben und Kolbenstange aber auch die Möglichkeit, den Betätigungskolben und die Kolbenstange direkt in Abstützung zueinander zu bringen. Der Begrenzungskolben muß in einem solchen Falle nicht unbedingt gegen die Begrenzungsfeder bewegt werden. Durch die elektrische Vorsteuerung über das Magnetventil kann auch eine Wirkung erzielt werden, selbst dann, wenn anströmseitig nur ein verminderter Druck zur Verfügung steht. Dies bedeutet, daß die elektrische Ansteuerung selbst dann nicht unmöglich wird, wenn der Eingangsdruck vermindert ist.

Der Begrenzungskolben kann in dem Betätigungskolben gleichsinnig gelagert sein. Der Begrenzungskolben ist durchbrochen ausgebildet und wird von der Kolbenstange abgedichtet durchsetzt, so daß sein Ende einen Anschlag für den Betätigungskolben bildet. Umgekehrt wäre es natürlich auch möglich, den Betätigungskolben mit einem stangenartigen Fortsatz zu versehen, der sich an die Kolbenstange anlegt.

Die zwei Ventilsitze der Durchlaßventile können auf dem dem Begrenzungskolben abgekehrten Teil der Kolbenstange verschiebbar und gedichtet gelagert sein. Sie bilden mit einem Ventilkörper des Rückschlagventils die beiden Durchlaßventile. Das eine Durchlaßventil ist erforderlich, um bei beginnender Zusammendrückung der Begrenzungsfeder und damit bei Bewegung der Kolbenstange eine Öffnungsstellung zu erreichen, damit Druckluft von dem Eingang zu dem Ausgang überströmen kann. Das andere Durchlaßventil muß eine Schließstellung ermöglichen, sobald der Begrenzungsdruck erreicht ist.

Aber auch die umgekehrte Anordnung ist möglich. Die zwei Ventilsitze können an einem Ventilkörper des Rückschlagventils vorgesehen und gebildet sein.

Der Ventilkörper des Rückschlagventils sollte auf einer einstellbaren Feder abgestützt sein. Zur Einstellung kann hier ein verstellbares Federauflager eingesetzt werden, wie es im Stand der Technik bekannt ist. Die Zugänglichkeit der Einstellbarkeit dieser Feder ist im allgemeinen nicht beeinträchtigt. Damit ist die Einstellung auf den Öffnungs- und Sicherungsdruck möglich.

Die Kolbenstange des Begrenzungskolbens kann einen Fortsatz zum Öffnen des Rückschlagventils aufweisen. Dieser Fortsatz dient zum ersten Öffnen des Druckbegrenzungs- und Drucksicherungsventils, wenn es pneumatisch wirkt.

Gewöhnlich sind die beiden Teile der Kolbenstange gegeneinander abgedichtet, wobei O-Ringe oder ähnliche Dichtungen zum Einsatz kommen. Es ist aber auch möglich, die beiden Teile der Kolbenstange über eine die Rückströmung von der Abströmseite auf die Anströmseite ermöglichende Überströmmanschette abzudichten. Damit wird eine Überströmung in einer Richtung möglich.

Die Erfindung wird anhand bevorzugter Ausführungsbeispiele weiter erläutert und beschrieben. Es zeigen:
- Fig. 1: einen Schnitt durch eine erste Ausführungsform des Druckbegrenzungs- und Drucksicherungsventils in drucklosem Zustand,
- Fig. 2: einen Schnitt durch eine zweite Ausführungsform des Druckbegrenzungs- und Drucksicherungsventils nach elektrischer Betätigung und vor Erreichen des Abschaltdruckes,
- Fig. 3: einen Schnitt durch die Ausführungsform gemäß Fig. 2 in der Abschlußstellung, also nach Erreichen des begrenzten eingestellten Druckes,
- Fig. 4: einen Schnitt durch die Ausführungsform der Fig. 2 und 3 bei Defekt im elektrischen Teil während einer pneumatischen Nachregelung infolge Luftverbrauch auf der Abströmseite,
- Fig. 5: einen Schnitt durch eine weitere Ausführungsform des Druckbegrenzungs- und Drucksicherungsventils in drucklosem Zustand, und
- Fig. 6: eine Detailvergrößerung aus der Mitte der Fig. 1 an einer abgewandelten Ausführungsform.

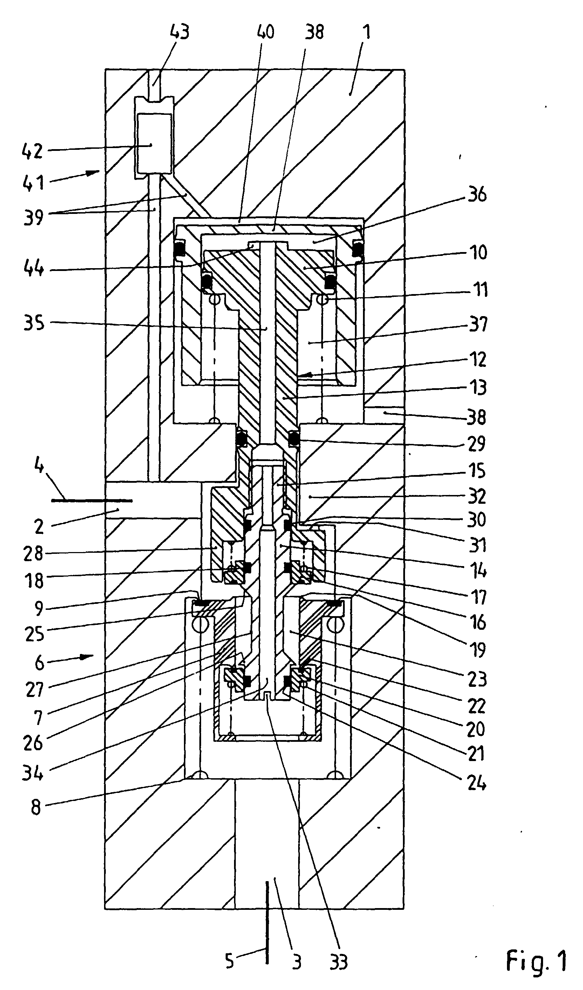

Die in Fig. 1 dargestellte Ausführungsform des Druckbegrenzungs- und Drucksicherungsventils weist ein Gehäuse 1 auf, in welchem ein anströmseitiger Eingang 2 und ein abströmseitiger Ausgang 3 verwirklicht sind. An den Eingang 1 ist eine Leitung 4 angeschlossen, in der von einer Druckluftquelle bereitgestellte Druckluft angeliefert wird. An dem Ausgang 3 ist eine Leitung 5 angeschlossen, die einem Kreis zugeordnet ist. Das Druckbegrenzungs- und Drucksicherungsventil kann in mehrfacher Anordnung in einer Druckluftaufbereitungseinrichtung angewendet werden, wie sie beispielsweise durch die DE 197 10 814 C1 gezeigt ist. Das in Fig. 1 dargestellte Druckbegrenzungs- und Drucksicherungsventil möge dem Kreis III, also dem Kreis für die Hilfs- und Feststellbremse sowie die Anhängerbremsung zugeordnet sein. Es versteht sich, daß das Druckbegrenzungs- und Drucksicherungsventil aber auch jedem anderen Kreis zugeordnet sein kann.

Der Eingang 2 steht mit dem Ausgang 3 innerhalb des Gehäuses 1 in Verbindung. In diese Verbindung ist ein Rückschlagventil 6 eingeschaltet, welches in Durchströmrichtung öffnet. Das Rückschlagventil 6 weist einen Ventilkörper 7 auf, der auf einer Feder 8 gehäuseseitig abgestützt ist und dessen Dichtfläche mit einem eingezogenen Gehäuserand 9 zusammenarbeitet. Der Ventilkörper 7 des Rückschlagventils 6 ist hohl ausgebildet.

Im Gehäuse 1 ist in der dargestellten Weise ein Begrenzungskolben 10 vorgesehen, der auf einer Begrenzungsfeder 11 gehäuseseitig abgestützt ist. Die Anordnung ist so getroffen, daß die Begrenzungsfeder 11 in Öffnungsrichtung des Rückschlagventils 6 zusammengedrückt wird. Der Begrenzungskolben 10 weist eine Kolbenstange 12 auf. Die Kolbenstange 12 ist geteilt, besitzt also die Teile 13 und 14, die über ein Einstellgewinde 15 miteinander in Verbindung stehen, so daß durch verschiedenweites relatives Verdrehen der Teile 13 und 14 zueinander die wirksame Länge der Kolbenstange 12 ver- und einstellbar ist. Damit kann letztendlich der zu begrenzende Druck eingestellt werden, wie später noch im Detail erläutert wird.

Auf der Kolbenstange 12, und zwar im Bereich des Teils 14, ist ein Ventilkörper 16 vorgesehen, der auf einer Feder 17 abgestützt ist. Der Ventilkörper 16 ist innerhalb seines Verschiebeweges gegenüber dem Teil 14 der Kolbenstange 12 über eine Dichtung 18 abgedichtet und arbeitet mit einem vorspringenden Rand 19 an dem Ventilkörper 7 des Rückschlagventils 6 zusammen. Damit wird ein erstes Durchlaßventil 16, 19 gebildet. In etwa spiegelsymmetrischer Weise ist ein weiterer Ventilkörper 20 auf einer Feder 21 abgestützt. Die Feder 21 ist auf dem Ventilkörper 7 aufgelagert. Der Ventilkörper 20 arbeitet mit einem Rand 22 an dem Ventilkörper 7 zusammen und bildet so ein zweites Durchlaßventil 20, 22. Zwischen den beiden Rändern 19 und 22 erstreckt sich eine Durchbrechung 23 durch den Ventilkörper 7, die sich auch ausgangsseitig, also in Richtung auf den Ausgang 3, fortsetzt. Auch der Ventilkörper 20 ist in seinem Bewegungsbereich über eine Dichtung 24 abgedichtet an der Kolbenstange 12 geführt.

Die beiden Ventilkörper 16 und 20 sind gegenüber dem Teil 14 der Kolbenstange 12 begrenzt beweglich gelagert. Hierzu dienen Vorsprünge 25 und 26 an dem Teil 14 der Kolbenstange 12. Zwischen den Vorsprüngen 25 und 26 besitzt der Teil 14 eine Einschnürung 27, so daß damit in Verbindung mit der Durchbrechung 23 ein kreisringförmiger Durchströmkanal gebildet wird.

An dem Teil 13 der Kolbenstange 12 ist ein Fortsatz 28 zum Öffnen des Rückschlagventils 6 vorgesehen. Die Kolbenstange 12 trägt eine Dichtung 29, mit der der Teil 13 in einem Gehäusedurchgang abgedichtet ist. Eine weitere Dichtung 30 dichtet die beiden Teile 13 und 14 der Kolbenstange 12 gegeneinander ab, und zwar unabhängig von der Einstellung des begrenzten Druckes über das Einstellgewinde 15. Der Teil 13 der Kolbenstange 12 ist im Gehäuse 1 verdrehgesichert gelagert. Hierzu weist der Teil 13 eine sich axial erstreckende Nut 31 auf, die mit einer sich ebenfalls axial erstreckenden Rippe 32 am Gehäuse 1 zusammenarbeitet. Damit wird die axiale Bewegung der Kolbenstange 12 bzw. des Teils 13 nicht behindert, jedoch ergibt sich die Möglichkeit, am Teil 14 der Kolbenstange 12 eine Angriffsfläche 33 für ein Verdrehwerkzeug vorzusehen. Die Angriffsfläche 33 ist von der Seite des Ausgangs 3 her zugänglich, so daß auf diese Art und Weise eine Verdrehung des Teils 14 gegenüber dem verdrehgesichert gelagerten Teil 13 der Kolbenstange 12 möglich ist. Damit wird die relative Lage der beiden Durchlaßventile 16, 19 und 20, 22 relativ zum Rückschlagventil 6 verändert, also letztendlich der begrenzte Druck eingestellt, der durch das Schließen des ersten Durchlaßventils 16, 19 definiert wird.

Die Kolbenstange 12 ist hohl ausgebildet. Sie weist im Bereich des Teils 14 einen Kanal 34 und im Bereich des Teils 13 einen Kanal 35 auf. Die beiden Kanäle 34 und 35 schließen abgedichtet durch die Dichtung 30 aneinander an, so daß ein oberhalb des Begrenzungskolbens 10 vorgesehener Steuerraum 36 immer mit dem Ausgang 3 bzw. der abströmseitig vorgesehenen Leitung 5 in Verbindung steht und daher vom Druck in der Leitung 5 entgegen der Kraft der Begrenzungsfeder 11 beaufschlagt wird. Auf der anderen Seite des Begrenzungskolbens 10 ist ein Federraum 37 gebildet, der über eine Entlüftungsöffnung an die Atmosphäre angeschlossen ist.

Für eine elektrische Betätigung des Druckbegrenzungs- und Drucksicherungsventils ist ein Betätigungskolben 38 vorgesehen, der im Gehäuse 1 gleitend und dichtend geführt ist und hier den Begrenzungskolben 10 umgibt, um eine kurze Bauweise zu realisieren. Von der Leitung 4 bzw. dem Eingang 2 führt eine Leitung 39 zu einer Steuerkammer 40 oberhalb des Betätigungskolbens 38. In der Leitung 39 ist ein Magnetventil 41 angeordnet, dessen Kern 42 entweder den Durchgang in der Leitung 39 oder in der anderen Stellung eine Entlüftungsöffnung 43 absperrt. Das Magnetventil 41 ist elektrisch betätigt, so daß jederzeit, je nach der gewünschten Steuerphilosophie, die Steuerkammer 40 beaufschlagt und damit der Begrenzungskolben 10 über den Betätigungskolben 38 verschoben werden kann. Der Begrenzungskolben 10 weist einen Anschlag 44 auf, der mit dem Boden des Betätigungskolbens 38 zusammenarbeitet. Der Federraum 37 ist auch dem Betätigungskolben 38 zugeordnet, so daß dieser auf der der Steuerkammer 40 abgekehrten Seite ebenfalls entlüftet ist.

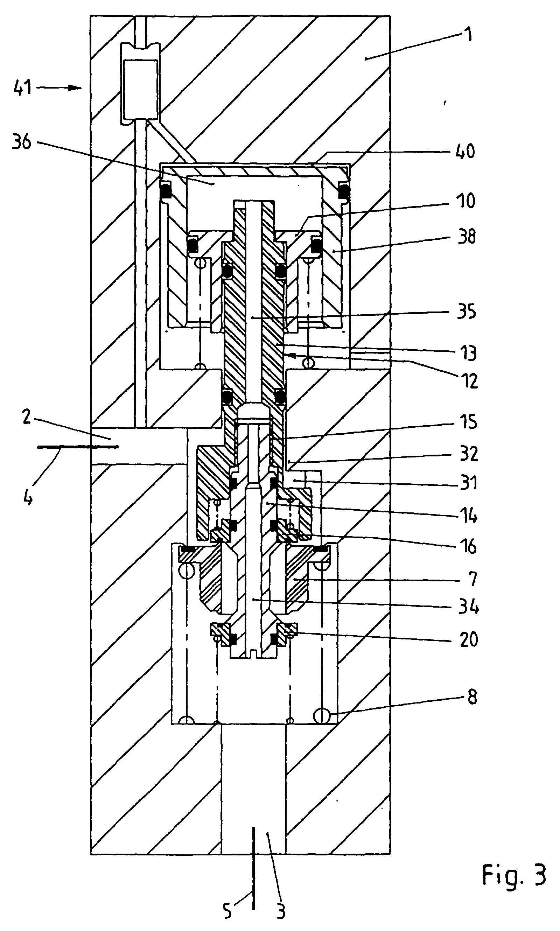

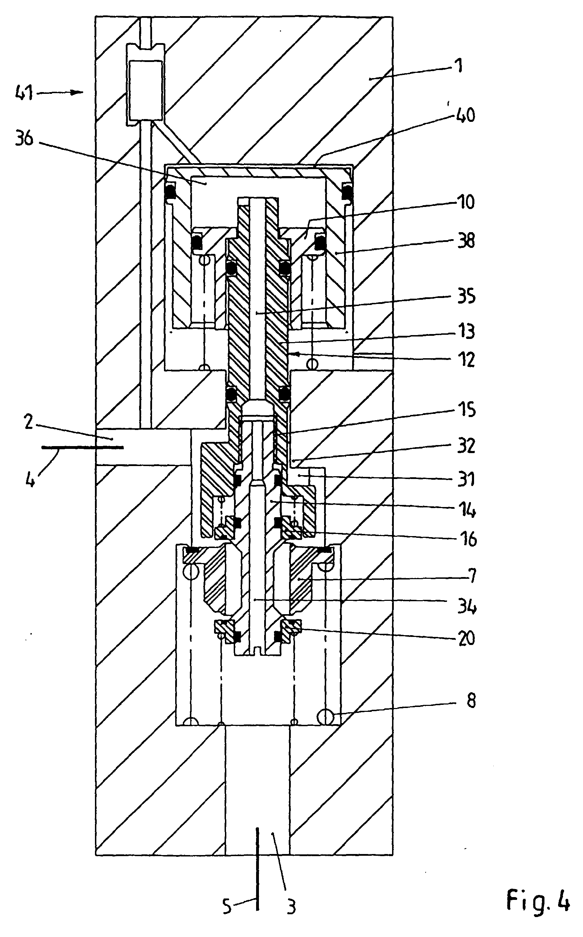

In Fig. 1 ist die drucklose Ausgangsstellung dargestellt. Über die Leitung 4 wird Druckluft zum Eingang 2 geschickt. Das Rückschlagventil 6 und das zweite Durchlaßventil 20, 22 sind geschlossen. Die Federn 8 und 21 sind so aufeinander abgestimmt, daß zuerst das Rückschlagventil 6 öffnet. Der Durchgang von dem Eingang 2 zu dem Ausgang 3 ist also zunächst geschlossen, bis anströmseitig ein gewisser Druckwert erreicht wird. Diese anfängliche Schließstellung ist beispielsweise sinnvoll für eine bevorzugte Befüllung vorangeschalteter Kreise. Erst wenn ein gewisser Öffnungsdruck erreicht wird, wird die Feder 8 zusammengedrückt, und der Ventilkörper 7 hebt von dem Gehäuserand 9 kurzfristig ab, so daß Druckluft zum Ausgang 3 überströmt. Das Rückschlagventil 6 wird eine Folge von Öffnungs- und Schließvorgängen ausführen, weil sich durch jedes überströmende Druckluftelement der anströmseitige Druck wieder kurzfristig erniedrigt. Abströmseitig erhöht sich damit der Druck, der zusätzlich zu der Feder 8 auf den Ventilkörper 7 einwirkt. Der sich abströmseitig am Ausgang 3 und damit in der Leitung 5, an die ein Vorratsbehälter angeschlossen ist, aufbauende Druck wirkt auch über die Kanäle 34 und 35 in dem Steuerraum 36 und damit auf der oberen Wirkfläche des Begrenzerkolbens 10. Mit steigendem Druck wird sich der Begrenzungskolben 10 mit seiner Kolbenstange 12 in Bewegung setzen, so daß schließlich bei bestimmter Druckhöhe eine Stellung erreicht wird, wie dies in Fig. 4 dargestellt ist. Das erste Durchlaßventil 16, 19 hat noch nicht geschlossen. Das zweite Durchlaßventil 20, 22 ist geöffnet, so daß hier die Druckluft überströmen kann und Öffnungsbewegungen des Rückschlagventils 6 fortan vermieden werden. Damit ist der Durchgang von der Anströmseite zur Abströmseite frei, und es wird sich abströmseitig der Druck weiter erhöhen, der sich auch im Steuerraum 36 auswirkt, so daß schließlich das erste Durchlaßventil 16, 19 schließen wird, wie dies in Fig. 3 dargestellt ist. Es ist dann der begrenzte und über das Einstellgewinde 15 eingestellte Druck abströmseitig vorhanden. Jede weitere Druckerhöhung in der Leitung 4 ist nicht in der Lage, irgendein Ventil zu öffnen, und zwar weder das Rückschlagventil 6 noch das erste Durchlaßventil 16, 19. Dabei muß berücksichtigt werden, daß die Kraft der Feder 8 so eingestellt ist, daß sie in der Lage ist, den Differenzdruck zwischen Eingang 2 und Ausgang 3 aufzunehmen bzw. auszugleichen. Die Feder 8 ist somit eine relativ hart ausgewählte bzw. dimensionierte Feder.

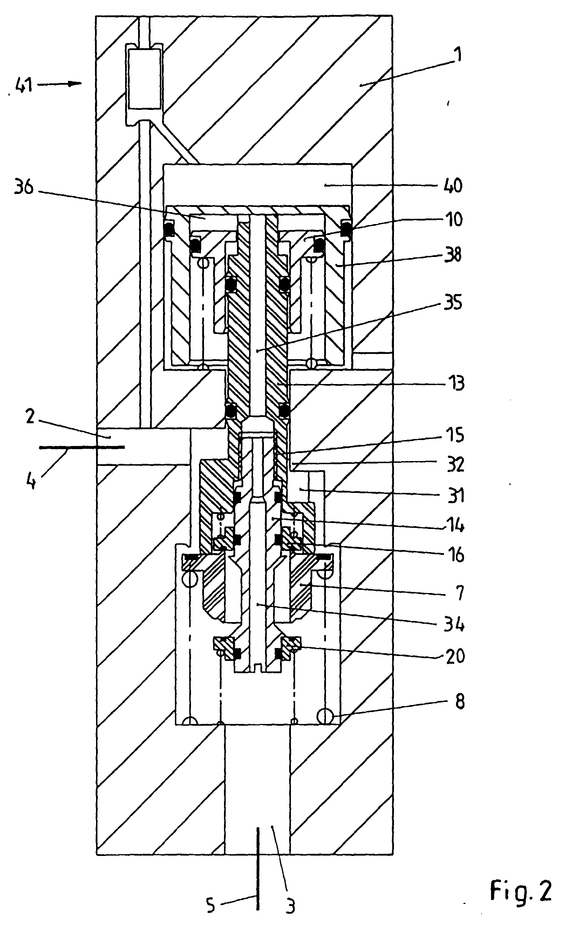

Die bisher beschriebene Funktion tritt immer dann ein, wenn im elektrischen Teil irgendeine Störung vorliegt, sei es, daß eine Spannungsversorgung unterbrochen ist, sei es, daß z. B. der Kern 42 des Magnetventils 41 blockiert o. dgl.. Normalerweise, d. h. bei völlig intakter Anlage, arbeitet das Druckbegrenzungs- und Drucksicherungsventil nicht pneumatisch, wie oben beschrieben, sondern es wird elektrisch vorgesteuert, und zwar über das Magnetventil 41. Auch hier im normalen Betrieb unterbleibt bei beginnendem Druckanstieg in der Leitung 4 beispielsweise zunächst ein Öffnungsvorgang, so daß das Ventil eine Schließstellung aufweist, wie dies in Fig. 1 dargestellt ist. Zu einem beliebigen wählbaren Zeitpunkt kann das Magnetventil 41 erregt werden, so daß sein Kern 42 in die andere, in Fig. 2 dargestellte Stellung übertritt. Es wird die Entlüftung 43 geschlossen und der am Eingang 2 anstehende Druck wirkt über die Leitung 39 in der Steuerkammer 40, so daß der Betätigungskolben 38 entsprechend belastet wird. Infolgedessen wird der Boden des Betätigungskolbens 38 sich an dem Anschlag 44 anlegen und den Begrenzungskolben 10 mit der Kolbenstange 12 nach unten verschieben. Dies geschieht entweder unter Zusammendrückung der Begrenzungsfeder 11 (Fig. 1) oder im Falle der Teilung des Begrenzungskolbens 10 und der Kolbenstange 12, wie dies in Fig. 2 dargestellt ist, auch in insoweit entlasteter Weise. Der Fortsatz 28 an dem Teil 14 der Kolbenstange 12 setzt auf den Ventilkörper 7 des Rückschlagventils 6 auf und hebt den Ventilkörper 7 von dem Gehäuserand 9 ab, wie des in Fig. 2 dargestellt ist. Damit ist der Öffnungsvorgang eingeleitet, und es kann Druckluft von der Leitung 4 in die Leitung 5 über das geöffnete Rückschlagventil 6 überströmen. Je nach der Zeitdauer, für die das Magnetventil 41 erregt wird, wird sich ein Druckanstieg am Ausgang 3 und damit in der Leitung 5 aufbauen. Wird das Magnetventil 41 in die nicht erregte Stellung überführt, bevor der begrenzte eingestellte Druck erreicht wird, arbeitet das Druckbegrenzungs- und Drucksicherungsventil weiterhin pneumatisch, d. h. es wird sich eine Zwischenstellung einstellen, wie dies in Fig. 4 dargestellt ist, bis der begrenzte eingestellte Druck abströmseitig erreicht ist und das erste Durchlaßventil 16, 19 wieder geschlossen ist. Es wird dann die Abschlußstellung gemäß Fig. 3 erreicht. Wird dagegen das Magnetventil 41 vergleichsweise länger erregt, so daß abströmseitig bereits ein höherer Druck aufgebaut wird, als es dem vorgesehenen und eingestellten begrenzten Druck entspricht, dann wird das Ventil auch eine Abschlußstellung einnehmen, und der insoweit höhere Druck steht abströmseitig zur Verfügung. Diese Besonderheit kann für verschiedene Anwendungsfälle genutzt werden. Im völlig intakten Falle kann also durch gezielte Ansteuerung des Magnetventils 41 auch die durch die Einstellung des begrenzten Druckes über das Einstellgewinde 15 vorgewählte Druckhöhe überschritten werden.

Findet abströmseitig ein Druckluftverbrauch statt, dann wird sich der Druck am Ausgang 3 und damit auch im Steuerraum 36 vergleichsweise erniedrigen. Die Abschlußstellung gemäß Fig. 3 wird verlassen, und die Begrenzungsfeder 11 in Verbindung mit der Feder 21 drücken den Begrenzungskolben 10 und die Kolbenstange 12 nach oben, so daß schließlich das Durchlaßventil 16, 19 öffnet, wie es in Fig. 4 dargestellt ist. Damit kann eine Drucknachspeisung erfolgen, die solange andauert, bis wieder der eingestellte begrenzte Bremsdruck in der Leitung 5 erreicht wird.

Die in Fig. 1 dargestellte Ausführungsform zeigt eine einstückige Ausbildung des Begrenzungskolbens 10 mit seiner Kolbenstange 12. Außerdem ist die Feder 21 des zweiten Durchlaßventils 20, 22 auf dem Ventilkörper 7 abgestützt. Die in den Fig. 2 bis 4 dargestellte Ausführungsform zeigt die Unterteilung zwischen Begrenzungskolben 10 und Kolbenstange 12, so daß der Begrenzungskolben 10 bei elektrischer Vorsteuerung des Druckbegrenzungs- und Drucksicherungsventils eine Zwischenstellung einnehmen kann, wie dies in Fig. 2 dargestellt ist, so daß insoweit die Begrenzungsfeder 11 in diesem Stadium nicht zusammengedrückt werden muß. Dies ist wichtig, wenn bei vergleichsweise niedrigem anstehenden Druck über das Magnetventil 41 bereits eine entsprechende ausreichende Steuerkraft aufgebracht bzw. ausgeübt werden soll. Bei der Ausführungsform gemäß den Fig. 2 bis 4 ist im übrigen die Feder 21 gehäuseseitig abgestützt.

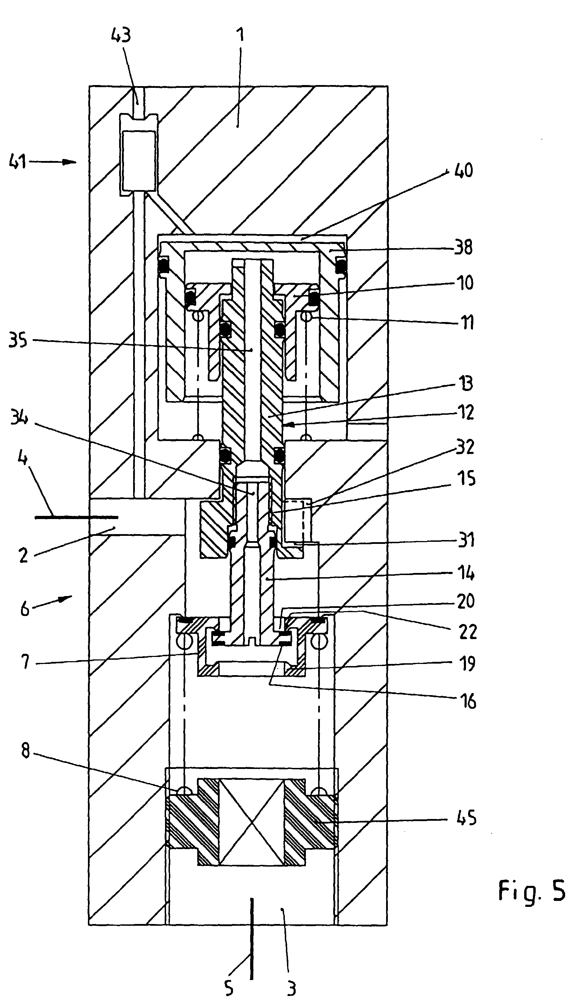

Die Fig. 1 bis 4 zeigen eine erste Ausführungsform der Verschachtelung des Rückschlagventils 6 zwischen den beiden Durchlaßventilen 16, 19 und 20, 22. In Fig. 5 ist diesbezüglich eine umgekehrte Ausführungsform dargestellt. Die beiden Dichtflächen und damit gleichsam die beiden Ventilkörper 16 und 20 sind am freien Ende des Teils 14 der Kolbenstange benachbart angeordnet, und zwar zwischen dem Rand 19 und dem Rand 22 an dem Ventilkörper 7, die hier nach innen gekehrt einander entgegengerichtet vorgesehen sind. Bei dieser Konstruktion entfallen die Federn 17 und 21. Der Ventilkörper 7 des Rückschlagventils 6 ist auch hier auf der Feder 8 abgestützt, die über eine Stellmutter in ihrer Kraft einstellbar ausgebildet ist. Es versteht sich, daß damit der Öffnungsdruck des Druckbegrenzungs- und Drucksicherungsventils einstellbar ist. Vorzugsweise ist diese Einstellbarkeit auch bei der Ausführungsform gemäß Fig. 1 bis 4 gegeben.

Fig. 5 zeigt die drucklose Grundstellung der Teile. Auch hier öffnet bei einem Druckanstieg zunächst das Rückschlagventil 6, für den Fall, daß keine elektrische Ansteuerung erfolgt. Bei elektrischer Ansteuerung wird das erste Durchlaßventil 16, 19 öffnen und in der Folge das zweite Durchlaßventil 20, 22 schließen, so daß bei fortgesetzter Bewegung der Ventilkörper 7 des Rückschlagventils 6 gegen die Kraft der Feder 8 öffnet und insoweit Druckluft in die Leitung 5 überströmt. Bei weiterer abströmseitiger Druckerhöhung wird schließlich der begrenzte eingestellte Druck erreicht. Es ergibt sich die Abschlußstellung, in der das Rückschlagventil 6 und das erste Durchlaßventil 16, 19 geschlossen sind. Es ist erkennbar, daß hier die Lage der beiden Durchlaßventile gerade umgekehrt ist wie bei der Ausführungsform der Fig. 1 bis 4.

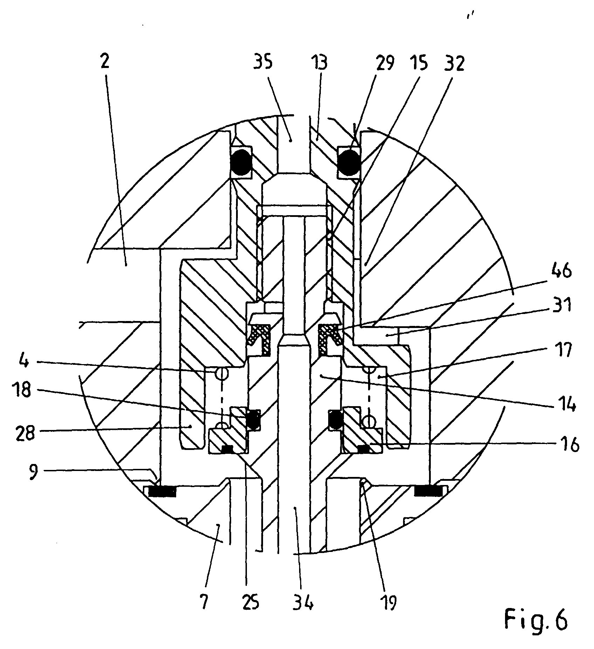

Fig. 6 zeigt schließlich eine Detaildarstellung aus dem Mittelbereich des Druckbegrenzungs- und Drucksicherungsventils gemäß Fig. 1. Lediglich die Dichtung 30 ist durch eine Überströmmanschette 46 ersetzt. Diese Überströmmanschette 46 ermöglicht die Überströmung von Druckluft von der Abströmseite hin zur Anströmseite für den Fall, daß der anströmseitige Druck niedriger ist. Dies kann in manchen Fällen erwünscht sein.

| **BEZUGSZEICHENLISTE** | | | |
|---|---|---|---|
| 1 | Gehäuse | 11 | Begrenzungsfeder |
| 2 | Eingang | 12 | Kolbenstange |
| 3 | Ausgang | 13 | Teil |
| 4 | Leitung | 14 | Teil |
| 5 | Leitung | 15 | Einstellgewinde |
| 6 | Rückschlagventil | 16 | Ventilkörper |
| 7 | Ventilkörper | 17 | Feder |
| 8 | Feder | 18 | Dichtung |
| 9 | Gehäuserand | 19 | Rand |
| 10 | Begrenzungskolben | 20 | Ventilkörper |
| 21 | Feder | 31 | Nut |
| 22 | Rand | 32 | Rippe |
| 23 | Durchbrechung | 33 | Angriffsfläche |
| 24 | Dichtung | 34 | Kanal |
| 25 | Vorsprung | 35 | Kanal |
| 26 | Vorsprung | 36 | Steuerraum |
| 27 | Einschnürung | 37 | Federraum |
| 28 | Fortsatz | 38 | Betätigungskolben |
| 29 | Dichtung | 39 | Leitung |
| 30 | Dichtung | 40 | Steuerkammer |
| 41 | Magnetventil | | |
| 42 | Kern | | |
| 43 | Entlüftungsöffnung | | |
| 44 | Anschlag | | |
| 45 | Stellmutter | | |
| 46 | Überströmmanschette | | |

## Patentansprüche

1. Druckbegrenzungs- und Drucksicherungsventil mit einem in einem Gehäuse (1) angeordneten anströmseitigen Eingang (2) und einem abströmseitigen Ausgang (3), mit einem zwischen Eingang (2) und Ausgang (3) angeordneten, in Durchströmrichtung öffnenden Rückschlagventil (6), mit einem auf einer Begrenzungsfeder (11) gehäuseseitig abgestützten Begrenzungskolben (10), der eine Wirkfläche besitzt, die vom Druck im Ausgang (3) beaufschlagt ist und der an einer Kolbenstange (12) zwei Ventilkörper (16, 20) trägt, die mit zwei Ventilsitzen je ein Durchlaßventil (16, 19; 20, 22) bilden, und mit einem Betätigungskolben (38) für eine Betätigung des Begrenzungskolbens (10) über ein elektrisch ansteuerbares Magnetventil (41), wobei das Magnetventil (41) in einer Leitung (39) angeordnet ist und nach seinem Öffnen Druckluft auf den Betätigungskolben (38) strömt, **dadurch gekennzeichnet**, daß die Kolbenstange (12) des Begrenzungskolbens (10) geteilt und mit einem Einstellgewinde (15) versehen ist, und daß die beiden Teile (13, 14) der Kolbenstange (12) des Begrenzungskolbens (10) gegeneinander abgedichtet sind.

2. Druckbegrenzungs- und Drucksicherungsventil nach Anspruch 1, **dadurch gekennzeichnet**, daß die Kolbenstange (12) und der Begrenzungskolben (10) durchbrochen ausgebildet sind, um die Wirkfläche auf diesem Wege mit Druckluft zu beaufschlagen.

3. Druckbegrenzungs- und Drucksicherungsventil nach Anspruch 1 und 2, **dadurch gekennzeichnet**, daß der dem Begrenzungskolben (10) zugekehrte Teil (13) der Kolbenstange (12) im Gehäuse (1) verdrehgesichert gelagert ist und daß der dem Betätigungskolben (10) abgekehrte Teil (14) der Kolbenstange (12) mit einer Angriffsfläche (33) für ein Verdrehwerkzeug versehen ist.

4. Druckbegrenzungs- und Drucksicherungsventil nach Anspruch 1 bis 3, **dadurch gekennzeichnet**, daß der Begrenzungskolben (10) und die Kolbenstange (12) als zwei getrennt bewegbare Teile ausgebildet sind, daß der Begrenzungskolben (10) auf der Begrenzungsfeder (11) abgestützt ist und daß zwischen Begrenzungskolben (10) und Kolbenstange (12) einseitig wirkende Anschläge vorgesehen sind.

5. Druckbegrenzungs- und Drucksicherungsventil nach Anspruch 4, **dadurch gekennzeichnet**, daß der Begrenzungskolben (10) in dem Betätigungskolben (38) gleichsinnig gelagert ist, daß der Begrenzungskolben (10) durchbrochen ausgebildet und von der Kolbenstange (12) abgedichtet durchsetzt ist, so daß sein Ende einen Anschlag (44) für den Betätigungskolben (38) bildet.

6. Druckbegrenzungs- und Drucksicherungsventil nach Anspruch 1 bis 5, **dadurch gekennzeichnet**, daß die zwei Ventilsitze auf dem dem Betätigungskolben (10) abgekehrten Teil (14) der Kolbenstange (12) verschiebbar und gedichtet gelagert sind, die mit einem Ventilkörper (7) des Rückschlagventils (6) die beiden Durchlaßventile (16, 19; 20, 22) bilden.

7. Druckbegrenzungs- und Drucksicherungsventil nach Anspruch 1 bis 5, **dadurch gekennzeichnet**, daß die zwei Ventilsitze an einem Ventilkörper (7) des Rückschlagventils (6) vorgesehen sind.

8. Druckbegrenzungs- und Drucksicherungsventil nach einem der Ansprüche 1 bis 7, **dadurch gekennzeichnet**, daß der Ventilkörper (7) des Rückschlagventils (6) auf einer einstellbaren Feder (8) abgestützt ist.

9. Druckbegrenzungs- und Drucksicherungsventil nach Anspruch 1 bis 8, **dadurch gekennzeichnet**, daß die Kolbenstange (12) des Begrenzungskolbens (10) einen Fortsatz (28) zum Öffnen des Rückschlagventils (6) aufweist.

10. Druckbegrenzungs- und Drucksicherungsventil nach Anspruch 1, **dadurch gekennzeichnet**, daß die beiden Teile (13, 14) der Kolbenstange (12) über eine die Rückströmung von der Abströmseite auf die Anströmseite ermöglichende Überströmmanschette (46) abgedichtet sind.
